# EUROPEAN PATENT SPECIFICATION

(11) **EP 2 918 802 B1**
(45) Date of publication and mention of the grant of the patent: **18.04.2018**
(21) Application number: 13845759.3
(22) Date of filing: 08.10.2013
(51) Int. Cl.: F01N 3/023, F01N 9/00, B66F 9/22, B66F 17/00, F02D 29/04, B60W 10/30

(54) **SAFETY DEVICE FOR PREVENTING WORKING-APPARATUS OPERATION DURING REGENERATION OF FORKLIFT-TRUCK DIESEL-EXHAUST-GAS AFTER-TREATMENT DEVICE**
SICHERHEITSVORRICHTUNG ZUR VERHINDERUNG DES BETRIEBS EINER ARBEITSVORRICHTUNG WÄHREND DER REGENERATION EINER VORRICHTUNG ZUR VERARBEITUNG EINES GABELSTAPLER-DIESELABGASES
DISPOSITIF DE SÉCURITÉ POUR EMPÊCHER LE FONCTIONNEMENT D'UN APPAREIL DE TRAVAIL PENDANT LA RÉGÉNÉRATION D'UN DISPOSITIF DE POST-TRAITEMENT DE GAZ D'ÉCHAPPEMENT DE DIESEL DE CHARIOT ÉLÉVATEUR À FOURCHE

(30) Priority: 11.10.2012 KR 20120112813
(43) Date of publication of application: 16.09.2015
(73) Proprietor: Doosan Corporation, Seoul 100-730 (KR)
(72) Inventor: WON, Ki Won, Incheon 405-835 (KR)
(74) Representative: Isarpatent
(86) International application number: PCT/KR2013/008968
(87) International publication number: WO 2014/058201

(56) References cited:
- JP-A- 2010 270 699
- JP-A- 2011 037 560
- JP-A- 2011 106 286
- KR-A- 20080 006 950
- KR-A- 20120 059 696

## Description

### [Technical Field]

The present disclosure relates to a safety device for preventing a working apparatus from being operated during regeneration of a diesel exhaust gas after-treatement device of a forklift-truck, and more particularly, to a safety device for preventing a working apparatus from being operated during regeneration of a diesel exhaust gas after-treatment device of a forklift-truck, which is capable of preventing a working apparatus from being operated when a worker leaves a driver's seat during regeneration of the diesel exhaust gas after-treatment device.

### [Background Art]

In general, a forklift-truck, in which a diesel engine is mounted, is provided with a diesel exhaust gas after-treatment device (diesel particulate filter, hereinafter, referred to as a "DPF") in a path through which exhaust gas is discharged.

Exhaust gas includes contaminant materials that pollute the atmosphere environment, and as a result, the exhaust has needs to be purified before being discharged to the air, of which the DPF is used as a purifying device.

In the meantime, exhaust gas includes carbon particles (soot, PM, etc.), and the carbon particles are accumulated inside the DPF, and when the amount of carbon particles is increased, a function of the DPF is degraded, so that when the carbon particles are accumulated to a predetermined level or more, regeneration of the DPF for removing the carbon particles is performed.

The generation of the DPF includes a passive regeneration, which is performed when a predetermined condition is satisfied, and an active regeneration, which is actively performed by an intention of a worker.

In a general vehicle, only when it is determined that it is safe by receiving a neutral gear stage/vehicle speed/parking brake signal and the like, the active regeneration of the DPF is performed.

In contrast, the forklift-truck is provided with a working apparatus in addition to a travelling function, so that when the DPF is actively regenerated, it is necessary to prepare against a safety accident.

Particularly, when the regeneration of the DPF is performed, rpm of an engine is higher than that of a general situation; subsequently, it is very difficult to operate the working apparatus during the regeneration of the DPF, so that a safety device is required.

For example, in the forklift-truck, when a worker inadvertently touches an operation lever of the working apparatus while leaving a driver's seat during the regeneration of the DPF, the working apparatus is operated, so that it is concerned a safety accident may occur. The document JP 2011-37560A discloses the components of such working apparatus.

### [Disclosure]

### [Technical Problem]

Accordingly, a technical object to be achieved by the present disclosure is to provide a safety device for preventing a working apparatus from being operated during regeneration of a DPF of a forklift-truck, which prevents a working apparatus from being operated even though an operation lever of the working apparatus is operated in an unintentional state during regeneration of a DPF of a forklift-truck.

A technical object to be achieved by the present disclosure is not limited to the aforementioned technical object, and other not-mentioned technical objects will be obviously understood from the description below by those with ordinary skill in the art to which the present disclosure pertains.

### [Technical Solution]

In order to achieve the above object, the present disclosure provides a safety device for preventing a working apparatus from being operated during regeneration of a diesel exhaust gas after-treatment device of a forklift-truck, including: a hydraulic pump 30 configured to discharge high-pressure working fluid; a main control valve 50 provided with a plurality of working apparatus control valves, and configured to provide the working fluid to a desired working apparatus 80 among a plurality of working apparatuses 80; a remote control valve 60 controlled so as to provide pilot working fluid to the plurality of working apparatus control valves according to an operation of a working apparatus actuation lever 61; a pressure-reducing valve 70 controlled in such a way that high-pressure working fluid discharged from the hydraulic pump 30 is pressure-reduced to a pressure of the pilot working fluid to provide the pressure-reduced working fluid to the remote control valve 60; and a control valve unit 100 disposed upstream of the remote control valve 60, and controlled in such a way so as to block the pressure-reduced working fluid from being provided to the remote control valve 60 by receiving a signal from the controller 20 based on worker departure information when a worker leaves a driver's seat during regeneration of a diesel particulate filter (DPF, the diesel exhaust-gas after-treatment device).

Further, when the worker sits on the driver's seat, the worker departure information may be released, so that the control valve unit 100 may be controlled to be open.

Further, a signal generated by a seat switch (seat S/W) provided at the driver's seat may be transmitted to an engine control unit (ECU) 10, and the transmitted signal may transmit the worker departure information from the ECU 10 to the controller 20.

Other detailed matters of the exemplary embodiments are included in the detailed description and the drawings.

### [Advantageous Effects]

According to the exemplary embodiment of the present disclosure, the safety device for preventing a working apparatus from being operated during regeneration of a DPF of a forklift-truck may prevent working fluid provided to a working apparatus from being supplied at the moment where a worker leaves a driver's seat, so that even though the working apparatus actuation lever 61 is operated in an unintentional state during regeneration of the DPF, the working apparatus is not operated, thereby preventing a safety accident.

Further, the safety device for preventing a working apparatus from being operated during regeneration of a DPF of a forklift-truck according to the present disclosure may prevent a working apparatus from being operated during regeneration of the DPF, so that there is no change in an output, thereby safely performing the regeneration of the DPF.

### [Description of Drawings]

FIG. 1 is a diagram for describing a safety device for preventing a working apparatus from being operated during regeneration of a DPF of a forklift-truck according to an exemplary embodiment of the present disclosure.
FIGS. 2 and 3 are diagrams of a hydraulic circuit of a forklift-truck to which the safety device for preventing a working apparatus from being operated during regeneration of a DPF of a forklift-truck according to the exemplary embodiment of the present disclosure is applied.

### [Description of Main Reference Numerals of Drawings]

10: Engine Control Unit (ECU)
20: Controller
30: Hydraulic pump
40: Preferential control valve
50: Main control valve (MCV)
60: Remote control valve (RCV)
70: Pressure-reducing valve
80: Working apparatus
81, 82: First and second working apparatus
100: Control valve unit

### [Best Mode]

Advantages and characteristics of the present disclosure, and a method of achieving the advantages and characteristics will be clear with reference to an exemplary embodiment described in detail below together with the accompanying drawings.

Like reference numerals indicate like elements throughout the specification.

In the meantime, the terms used in the description below are defined considering the functions of the present disclosure, and may vary depending on the intention or usual practice of a manufacturer, so that the definitions thereof should be made based on the entire contents of the present specification.

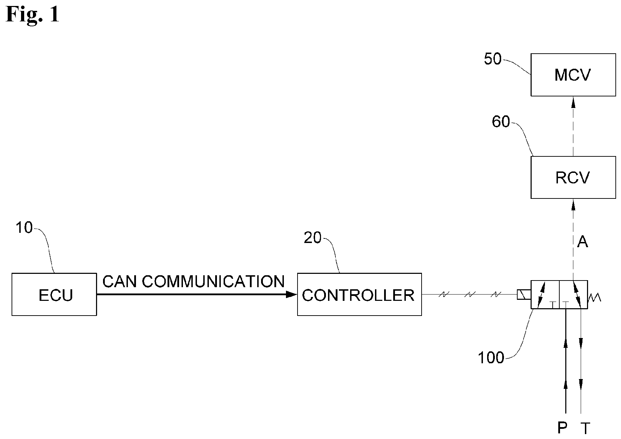

Hereinafter, a safety device for preventing a working apparatus from being operated during regeneration of a DPF of a forklift-truck according to an exemplary embodiment of the present disclosure will be described with reference to FIGS. 1 to 3.

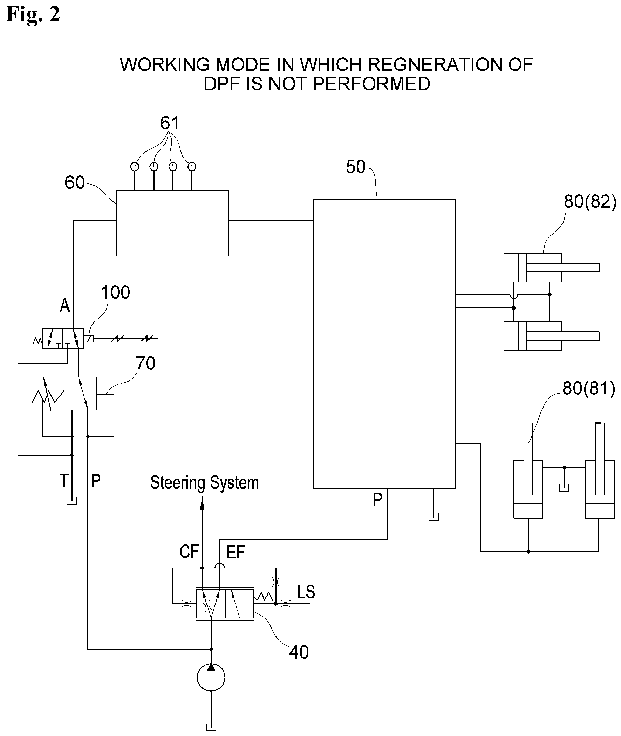

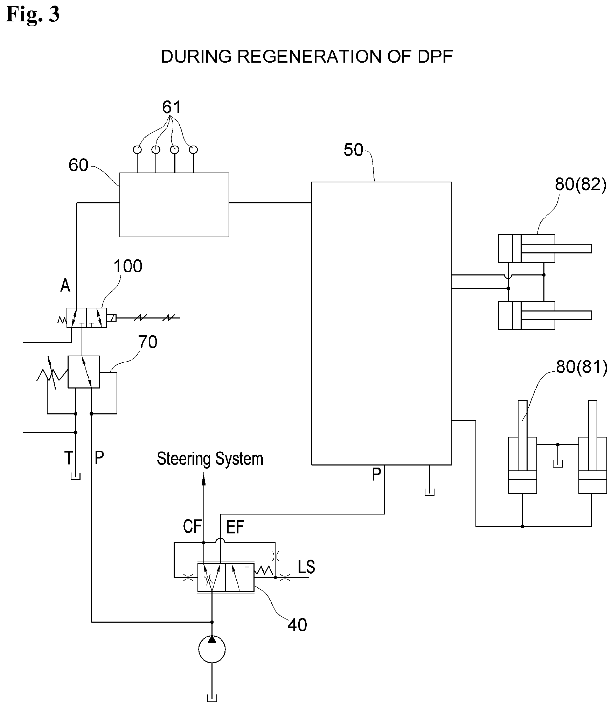

FIG. 1 is a diagram for describing a safety device for preventing a working apparatus from being operated during regeneration of a DPF of a forklift-truck according to an exemplary embodiment of the present disclosure. FIGS. 2 and 3 are diagrams of a hydraulic circuit of a forklift-truck to which the safety device for preventing a working apparatus from being operated during regeneration of a DPF of a forklift-truck according to the exemplary embodiment of the present disclosure is applied.

As illustrated in FIG. 1, a safety device for preventing a working apparatus from being operated during regeneration of a DPF of a forklift-truck according to an exemplary embodiment of the present disclosure is provided with a control valve unit 100 upstream of a remote control valve (RCV) 60, and the control valve unit 100 is controlled to be opened/closed by a command from a controller 20.

The controller 20 receives information from an engine control unit (ECU) 10 through CAN communication.

The ECU 10 receives a signal from a seat switch (seat S/W) installed in a driver's seat, and the seat switch generates a signal when a worker leaves the driver's seat.

That is, when the worker stands up from the driver's seat, the seat switch generates a signal, and the generated signal is transmitted by the ECU 10, and the transmitted signal provides worker departure information to the controller 20, and when the worker departure information is received, the controller 20 blocks a flow of working fluid by operating the control valve unit 100.

An operation of the safety device for preventing a working apparatus from being operated during regeneration of a DPF of a forklift-truck according to the exemplary embodiment of the present disclosure will be described in more detail with reference to FIG. 2.

The hydraulic circuit of a forklift-truck discharges working fluid from a hydraulic pump 30, and the working fluid is provided to a main control valve 50 via a preferential control valve 40.

The preferential control valve 40 makes the working fluid to be distributed to a travelling system and a working apparatus, and preferentially distributes the larger amount of working fluid to the working apparatus than the travelling system.

The main control valve 50 is connected with a working apparatus 80, and a plurality of working apparatus control valves is disposed inside the main control valve 50. For example, when the working apparatus 80 includes two working apparatuses including a first working apparatus and a second working apparatus, two working apparatus control valves may be utilized among the plurality of working apparatus control valves.

The working apparatus control valve makes working fluid flow in a forward direction and in a reverse direction, and stops a flow of working fluid according to a position of a spool. The spool is controlled by the RCV 60, and the RCV 60 is provided with a working apparatus actuation lever 61.

That is, in order to operate a specific working apparatus, a working apparatus actuation lever 61 of a corresponding working apparatus is operated, and pilot working fluid is discharged from the RCV 60 according to the operation of the working apparatus actuation lever 61 to move the spool of a control valve of the corresponding working apparatus, so that desired work is performed.

A part of working fluid discharged from the hydraulic pump 30 is used as the pilot working fluid. A pressure of the working fluid discharged from the hydraulic pump 30 is high, so that the pressure of the working fluid is reduced to be appropriate to a pressure of the pilot working fluid. A pressure-reducing valve 70 is used for reducing a pressure.

That is, when a predetermined pressure is set in the pressure-reducing valve 70, a high-pressure working fluid is pressure-reduced via the pressure-reducing valve 70, and the pressure-reduced working fluid is provided to the RCV 60 via the control valve unit 100.

In the meantime, when the worker leaves the driver's seat during regeneration of the DPF, worker departure information is generated from the ECU 10, and the generated worker departure information is provided to the controller 20, and the controller 20 blocks a flow of the working fluid by controlling the control valve unit 100 as illustrated in FIG. 3.

Further, the RCV 60 is connected with a drain tank, so that pressure is not formed. Accordingly, even though the working apparatus actuation lever 61 is operated, the pilot working fluid is not discharged from the RCV 60 and further, the working apparatus 80 does not move.

That is, when the worker leaves the driver's seat during the regeneration of the DPF, the working fluid is prevented from being provided to the RCV 60, so that even though the worker touches the working apparatus actuation lever 61 by mistake, the working apparatus does not move, thereby preventing a safety accident.

Then, when the worker normally sits on the driver's seat, the worker departure information is released, so that the control valve unit 100 returns to a general working mode, and thus the working fluid is provided to the RCV 60. That is, the working apparatus is operated by operating the working apparatus actuation lever 61 according to an intention of the worker.

As described above, the safety device for preventing a working apparatus from being operated during regeneration of a DPF of a forklift-truck according to the exemplary embodiment of the present disclosure may prevent working fluid provided to a working apparatus from being supplied at the moment where a worker leaves a driver's seat, so that even though the working apparatus actuation lever 61 is operated in an unintentional state during regeneration of the DPF, the working apparatus is not operated, thereby preventing a safety accident.

Further, the safety device for preventing a working apparatus from being operated during regeneration of a DPF of a forklift-truck according to the exemplary embodiment of the present disclosure may prevent a working apparatus from being operated during regeneration of the DPF, so that there is no change in an output, thereby safely performing the regeneration of the DPF.

The exemplary embodiments of the present disclosure have been described with reference to the accompanying drawings, but those skilled in the art will understand that the present disclosure may be implemented in other specific forms without changing the technical spirit or an essential feature thereof.

Accordingly, it will be understood that the aforementioned exemplary embodiments are described for illustration in all aspects and are not limited, and it will be construed that the scope of the present disclosure is represented by the claims to be described below, and all of the changes or modified forms induced from the meaning and the scope of the claims, and an equivalent concept thereof are included in the scope of the present disclosure.

### [Industrial Applicability]

The safety device for preventing a working apparatus from being operated during regeneration of a DPF of a forklift-truck according to the exemplary embodiment of the present disclosure may be used for preventing a working apparatus from moving even if a lever is inadvertently touched during regeneration of a DPF.

## Claims

1. A safety device for preventing a working apparatus from being operated during regeneration of a diesel exhaust gas after-treatment device of a forklift-truck, comprising:
a hydraulic pump (30) configured to discharge high-pressure working fluid;
a main control valve (50) provided with a plurality of working apparatus control valves, and configured to provide the working fluid to a desired working apparatus (80) among a plurality of working apparatuses (80);
a remote control valve (60) controlled so as to provide pilot working fluid to the plurality of working apparatus control valves according to an Operation of a working apparatus actuation lever (61); and
a pressure-reducing valve (70) controlled in such a way that high-pressure working fluid discharged from the hydraulic pump (30) is pressure-reduced to a pressure of the pilot working fluid to provide the pressure-reduced working fluid to the remote control valve (60);
**characterized by** a control valve unit (100) disposed upstream of the remote control valve (60),
and controlled in such a way so as to block the pressure-reduced working fluid from being provided to the remote control valve (60) by receiving a signal from the controller (20) based on worker departure information when a worker leaves a driver's seat during regeneration of a diesel particulate filter (DPF).

2. The safety device of claim 1, wherein when the worker sits on the driver's seat,
the worker departure information is released, so that the control valve unit (100) is controlled to be open.

3. The safety device of claim 1 or 2, wherein a Signal generated by a seat switch (seat S/W) provided at the driver's seat is transmitted to an engine control unit (ECU) (10), and the transmitted Signal transmits the worker departure information from the (ECU) (10) to the controller (20).

## Patentansprüche

1. Sicherheitsvorrichtung zum Verhindern, dass ein Arbeitsgerät während der Regeneration einer Dieselabgasnachbehandlungsvorrichtung eines Gabelstaplers betrieben wird, umfassend:
eine Hydraulikpumpe (30), die dafür ausgestaltet ist, Hochdruckarbeitsfluid auszugeben;
ein Hauptsteuerventil (50), das mit mehreren Arbeitsgerät-Steuerventilen versehen ist und dafür ausgestaltet ist, das Arbeitsfluid einem gewünschten Arbeitsgerät (80) unter mehreren Arbeitsgeräten (80) zuzuführen;
ein Fernsteuerventil (60), das so gesteuert wird, dass es den mehreren Arbeitsgerät-Steuerventilen ein Pilot-Arbeitsfluid gemäß der Betätigung eines Arbeitsgerät-Bedienhebels (61) zuführt; und
ein Druckminderungsventil (70), das in einer derartigen Weise gesteuert wird, dass von der Hydraulikpumpe (30) abgegebenes Hochdruckarbeitsfluid auf einen Druck des Pilot-Arbeitsfluids druckgemindert wird, um das druckgeminderte Arbeitsfluid dem Fernsteuerventil (60) zuzuführen;
**gekennzeichnet durch** eine Steuerventileinheit (100), die stromaufwärts des Fernsteuerventils (60) angeordnet ist und in einer derartigen Weise gesteuert wird, dass verhindert wird, dass das druckgeminderte Arbeitsfluid dem Fernsteuerventil (60) zugeführt wird, indem ein Signal von der Steuereinheit (20) auf der Basis von Arbeiterabwesenheitsinformationen empfangen wird, wenn ein Arbeiter während der Regeneration eines Dieselpartikelfilters (DPF) einen Fahrersitz verlässt.

2. Sicherheitsvorrichtung nach Anspruch 1, wobei, wenn der Arbeiter auf dem Fahrersitz sitzt, die Arbeiterabwesenheitsinformationen so ausgesendet werden, dass die Steuerventileinheit (100) in den offenen Zustand gesteuert wird.

3. Sicherheitsvorrichtung nach Anspruch 1 oder 2, wobei ein Signal, das durch einen Sitzschalter (Sitz-SW) erzeugt wird, der an dem Fahrersitz angeordnet ist, zu einer Motorsteuereinheit (ECU) (10) gesendet wird und das gesendete Signal die Arbeiterabwesenheitsinformationen von der (ECU) (10) zu der Steuereinheit (20) überträgt.

## Revendications

1. Dispositif de sécurité destiné à éviter qu'un appareil de travail soit utilisé pendant la régénération d'un dispositif de post-traitement des gaz d'échappement de moteur diesel d'un chariot élévateur à fourche, comprenant :
une pompe hydraulique (30) conçue pour refouler un fluide de travail à haute pression ;
une vanne de commande principale (50) pourvue d'une pluralité de vannes de commande d'appareils de travail, et conçue pour fournir le fluide de travail à un appareil de travail souhaité (80) parmi une pluralité d'appareils de travail (80) ;
une vanne de commande à distance (60) commandée de manière à fournir un fluide de travail de pilotage à la pluralité de vannes de commande d'appareils de travail en fonction d'un actionnement de levier d'actionnement d'appareil de travail (61) ; et
un réducteur de pression (70) commandé de manière qu'un fluide de travail à haute pression refoulé par la pompe hydraulique (30) soit ramené à une pression du fluide de travail de pilotage pour fournir le fluide de travail à pression réduite à la vanne de commande à distance (60) ; **caractérisé par** une unité de vanne de commande (100) disposée en amont de la vanne de commande à distance (60),
et commandée de manière à empêcher le fluide de travail à pression réduite d'être fourni à la vanne de commande à distance (60) en recevant un signal en provenance du dispositif de commande (20) sur la base d'une information de départ de travailleur, lorsqu'un travailleur quitte un siège de conducteur au cours de la régénération d'un filtre à particules diesel (FPD).

2. Dispositif de sécurité selon la revendication 1, dans lequel lorsque le travailleur s'assied sur le siège de conducteur, l'information de départ de travailleur est annulée, de manière que l'unité de vanne de commande (100) soit commandée en ouverture.

3. Dispositif de sécurité selon la revendication 1 ou 2, dans lequel un signal produit par un contact de siège (*seat S*/*W)* mis en place au niveau du siège de conducteur est émis vers une unité de commande de moteur (ECU, *engine control unit*) (10), et le signal émis transmet l'information de départ de travailleur, de l'unité ECU (10) au dispositif de commande (20).
